# EUROPEAN PATENT APPLICATION

(11) **EP 4 826 341 A1**
(43) Date of publication of application: **21.10.2026**
(21) Application number: 24903914.0
(22) Date of filing: 30.09.2024
(51) Int. Cl.: G01J 3/52, G01J 3/46, G08C 17/02

(54) **METALLIC COLOR FORMULATION METHOD AND APPARATUS USING SAME**

(30) Priority: 12.12.2023 KR 20230179827
(71) Applicant: KCC Corporation, Seoul 06608 (KR)
(72) Inventor: PARK, Junha, Yongin-si, Gyeonggi-do 16891 (KR); KIM, Kyujun, Yongin-si, Gyeonggi-do 16908 (KR)
(74) Representative: Pfenning, Meinig & Partner mbB
(86) International application number: PCT/KR2024/014901
(87) International publication number: WO 2025/127346

(57) **Abstract**

According to an embodiment disclosed in the present document, a metallic color formulation method includes the steps of: acquiring target color information and target particle information of a target object; generating at least one set of blending information on the basis of the target color information and the target particle information; comparing blend color information and blend particle information, which correspond to the blending information, with the target color information and the target particle information, respectively; and determining optimal blending information on the basis of results of comparing the blend color information and the blend particle information with the target color information and the target particle information, respectively.

## Description

### [Technical Field]

### CROSS-REFERENCE TO RELATED APPLICATION

This application claims the benefit of priority to Korean Patent Application No. 10-2023-0179827, filed in the Korean Intellectual Property Office on December 12, 2023, the entire contents of which are incorporated herein by reference.

### Technical field

Embodiments disclosed in this specification relate to a metallic color mixing method and a device by using the same.

### [Background Art]

There are various types of paints for painting (including refinishing) target objects (e.g., vehicles). There are solid color paints (which do not include metallic particles and/or pearl particles) and effect color paints (which include metallic particles and/or pearl particles).

Among them, since metallic particles and/or pearl particles are not present in the case of solid color, combination information is generated based on color information of a target object acquired through a conventional colorimeter, and the color obtained by applying the paint generated according to the corresponding combination information to the target object is identical/similar to the existing color of the target object.

On the other hand, in the case of effect colors, since metallic particles and/or pearl particles are present, graininess is incapable of being known without directly identifying metallic particles and/or pearl particles applied to the target object with the naked eye, and thus combination information suitable for the target object may not be generated.

Accordingly, conventionally, a physical sample of the target object is required to generate appropriate combination information for refinishing the target object. However, after the physical sample is generated, it is transported/delivered to an appropriate location is time-consuming and costly.

Moreover, conventionally, the combination information was generated by visually determining the graininess of metallic or pearl particles with the naked eye, thereby resulting in differences in graininess for each colorant, even for the same target object.

### [Disclosure]

### [Technical Problem]

Embodiments disclosed in the specification provide a metallic color mixing method and a metallic color mixing device by using the same.

Embodiments disclosed in the specification provide a metallic color mixing method for accurately deriving optimal combination information corresponding to a target object without the need for a physical sample of the target object, and a metallic color mixing device by using the same.

Embodiments disclosed in the specification provide a metallic color mixing method for quickly deriving optimal combination information corresponding to the target object by transmitting and acquiring color information and particle information about the target object, and a metallic color mixing device by using the same.

Embodiments disclosed in the specification provide a metallic color mixing method for transmitting optimal combination information corresponding to the target object, and a metallic color mixing device by using the same.

Embodiments disclosed in the specification provide a metallic color mixing method for deriving and transmitting optimal combination information in consideration of the visual acceptability tolerance of a human, and a metallic color mixing device by using the same.

### [Technical Solution]

According to an embodiment disclosed in the specification, a metallic color mixing method may include obtaining target particle information and target color information of a target object, generating at least one combination information based on the target color information and the target particle information, comparing combination color information and combination particle information corresponding to the combination information with the target color information and the target particle information, respectively, and determining optimal combination information based on a result of respectively comparing the combination color information and the combination particle information with the target color information and target particle information.

For example, the determining of the optimal combination information may include determining the specific combination information as the optimal combination information, when a color difference value between the target color information and specific combination color information corresponding to specific combination information among the combination information is within a threshold color difference range, and a particle difference value between the target particle information and specific combination particle information corresponding to the specific combination information is within a threshold particle difference range.

For example, the target color information may include first to nth target color information at first to nth color measurement angles, the target particle information includes first to mth target particle information at first to mth particle measurement angles, the combination color information may include first to nth combination color information at the first to nth color measurement angles, and, the combination particle information includes first to mth combination particle information at the first to mth particle measurement angles.

For example, the determining of the optimal combination information may include determining the specific combination information as the optimal combination information (i) when a color difference value between the first to nth target color information and first to nth specific combination color information at the first to nth color measurement angles of the specific combination information is within the threshold color difference range, and (ii) a particle difference value between the first to mth target particle information and first to mth specific combination particle information at the first to mth particle measurement angles of the specific combination information is within the threshold particle difference range.

For example, the color difference value may be calculated based on lightness information, chroma information, and hue information of each of the specific combination color information and the target color information, and the particle difference value may be calculated based on particle intensity information and particle area information of each of the specific combination particle information and the target particle information.

For example, the determining of the optimal combination information may include generating at least one modified combination information based on the target color information and the target particle information when a color difference value between the combination color information and the target color information is outside a threshold color difference range, or a particle difference value between the combination particle information and the target particle information is outside a threshold particle difference range, comparing modified combination color information and modified combination particle information corresponding to the modified combination information with the target color information and the target particle information, respectively, and determining optimal combination information based on a result of respectively comparing the modified combination color information and the modified combination particle information with the target color information and target particle information.

For example, the method may further include providing the optimal combination information to a user terminal after the determining of the optimal combination information.

According to an embodiment disclosed in the specification, a metallic color mixing device may include an acquisition unit that obtains target particle information and target color information of a target object, a generation unit that generates at least one combination information based on the target color information and the target particle information, a comparison unit that compares combination color information and combination particle information corresponding to the combination information with the target color information and the target particle information, respectively, and a determination unit that determines optimal combination information based on a result of respectively comparing the combination color information and the combination particle information with the target color information and target particle information.

For example, when a color difference value between the target color information and specific combination color information corresponding to specific combination information among the combination information is within a threshold color difference range, and a particle difference value between the target particle information and specific combination particle information corresponding to the specific combination information is within a threshold particle difference range, the determination unit may determine the specific combination information as the optimal combination information.

For example, the target color information may include first to nth target color information at first to nth color measurement angles, the target particle information includes first to mth target particle information at first to mth particle measurement angles, the combination color information may include first to nth combination color information at the first to nth color measurement angles, and, the combination particle information includes first to mth combination particle information at the first to mth particle measurement angles.

For example, (i) when a color difference value between the first to nth target color information and first to nth specific combination color information at the first to nth color measurement angles of the specific combination information is within the threshold color difference range, and (ii) a particle difference value between the first to mth target particle information and first to mth specific combination particle information at the first to mth particle measurement angles of the specific combination information is within the threshold particle difference range, the determination unit may determine the specific combination information as the optimal combination information.

For example, the color difference value may be calculated based on lightness information, chroma information, and hue information of each of the specific combination color information and the target color information, and the particle difference value may be calculated based on particle intensity information and particle area information of each of the specific combination particle information and the target particle information.

For example, when a color difference value between the combination color information and the target color information is outside a threshold color difference range, or a particle difference value between the combination particle information and the target particle information is outside a threshold particle difference range, the generation unit may generate at least one modified combination information based on the target color information and the target particle information, the comparison unit may compare modified combination color information and modified combination particle information corresponding to the modified combination information with the target color information and the target particle information, respectively, and the determination unit may determine optimal combination information based on a result of respectively comparing the modified combination color information and the modified combination particle information with the target color information and target particle information.

For example, the metallic color mixing device may further include a communication device that provides the optimal combination information to a user terminal.

### [Advantageous Effects]

Embodiments disclosed in the specification may provide a metallic color mixing method and a metallic color mixing device by using the same.

Embodiments disclosed in the specification may provide a metallic color mixing method for accurately deriving optimal combination information corresponding to a target object without the need for a physical sample of the target object, and a metallic color mixing device by using the same.

Embodiments disclosed in the specification may provide a metallic color mixing method for quickly deriving optimal combination information corresponding to the target object by transmitting and acquiring color information and particle information about the target object, and a metallic color mixing device by using the same.

Embodiments disclosed in the specification may provide a metallic color mixing method for transmitting optimal combination information corresponding to the target object, and a metallic color mixing device by using the same.

Embodiments disclosed in the specification may provide a metallic color mixing method for deriving and transmitting optimal combination information in consideration of the visual acceptability tolerance of a human, and a metallic color mixing device by using the same.

In addition, a variety of effects directly or indirectly understood via the specification may be provided.

### [Description of Drawings]

FIG. 1 is a drawing illustrating a color combination conversion device, according to an embodiment of the present disclosure.
FIG. 2 is a flowchart schematically illustrating a metallic color mixing method, according to an embodiment disclosed in the specification.
FIG. 3 is a diagram showing an average of particle difference values for each determination section.
FIGS. 4A to 4D are diagrams schematically illustrating a UI corresponding to a metallic color mixing method, according to an embodiment disclosed in the specification.

With regard to description of drawings, the same or similar components will be marked by the same or similar reference signs.

### [Mode for Invention]

Hereinafter, various embodiments of the present disclosure may be described with reference to accompanying drawings. However, it should be understood that this is not intended to limit the present disclosure to specific implementation forms and includes various modifications, equivalents, and/or alternatives of embodiments of the present disclosure.

In this specification, the singular form of the noun corresponding to an item may include one or more of items, unless interpreted otherwise in context. In the present disclosure, the expressions "A or B", "at least one of A and B", "at least one of A or B", "A, B, or C", "at least one of A, B, and C", and "at least one of A, B, or C" may include any and all combinations of one or more of the associated listed items. The terms, such as "first" or "second" may be used to simply distinguish the corresponding component from the other component, but do not limit the corresponding components in other aspects (e.g., importance or order). When a component (e.g., a first component) is referred to as being "coupled with/to" or "connected to" another component (e.g., a second component) with or without the term of "operatively" or "communicatively", it may mean that a component is connectable to the other component, directly (e.g., by wire), wirelessly, or through the third component.

Each component (e.g., a module or a program) of components described in this specification may include a single entity or a plurality of entities. According to various embodiments, one or more components of the corresponding components or operations may be omitted, or one or more other components or operations may be added. Alternatively or additionally, a plurality of components (e.g., a module or a program) may be integrated into one component. Herein, the integrated component may perform one or more functions of each component of the plurality of components in the manner same as or similar to being performed by the corresponding component of the plurality of components prior to the integration. According to various embodiments, operations executed by modules, programs, or other components may be executed by a successive method, a parallel method, a repeated method, or a heuristic method. Alternatively, at least one or more of the operations may be executed in another order or may be omitted, or one or more operations may be added.

The term "module" or "... unit" used herein may include a unit, which is implemented with hardware, software, or firmware, and may be interchangeably used with the terms "logic", "logical block", "part", or "circuit". The "module" may be a minimum unit of an integrated part or may be a minimum unit of the part for performing one or more functions or a part thereof. For example, according to an embodiment, the module may be implemented in the form of an application-specific integrated circuit (ASIC).

Various embodiments of the present disclosure may be implemented with software (e.g., a program or an application) including one or more instructions stored in a storage medium (e.g., a memory) readable by a machine. For example, the processor of a machine may call at least one instruction of the stored one or more instructions from a storage medium and then may execute the at least one instruction. This enables the machine to operate to perform at least one function depending on the called at least one instruction. The one or more instructions may include a code generated by a complier or a code executable by an interpreter. The machine-readable storage medium may be provided in the form of a non-transitory storage medium. Herein, 'non-transitory' just means that the storage medium is a tangible device and does not include a signal (e.g., electromagnetic waves), and this term does not distinguish between the case where data is semipermanently stored in the storage medium and the case where the data is stored temporarily.

For reference, for the sake of convenience of description, a term of "metallic color" is used below, but this should not be interpreted as limited to a color (combination information) that includes only metallic particles, and should be interpreted as encompassing a color (combination information) that includes only pearl particles, or a color (combination information) that includes both metallic particles and pearl particles.

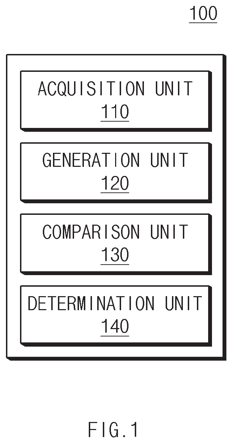

FIG. 1 is a drawing to help understand a metallic color mixing device 100, according to an embodiment disclosed in the specification, and schematically illustrates the metallic color mixing device 100.

Referring to FIG. 1, the metallic color mixing device 100 may include an acquisition unit, a generation unit, a comparison unit, and a determination unit.

First of all, the acquisition unit may obtain target particle information and target color information of a target object.

Herein, a device generating the target color information and the target particle information may be a separate device from, but is not limited to, the metallic color mixing device 100 according to an embodiment disclosed in the specification, and may also be a module embedded in the metallic color mixing device according to an embodiment disclosed in the specification.

The generation unit may generate at least one combination information based on the target color information and the target particle information.

For reference, a process of generating combination information based on the color information and the particle information is well known to those skilled in the art, and thus a detailed description thereof will be omitted.

The comparison unit may compare combination color information and combination particle information corresponding to the combination information with the target color information and the target particle information, respectively.

Herein, angles at which (i) the color and particles of the paint applied to a target object, and (ii) the color and particles of the paint based on the combination information are observed and measured may be a plurality of angles.

For example, the target color information may include the first to nth target color information at the first to nth color measurement angles; the target particle information may include the first to mth target particle information at the first to mth particle measurement angles; the combination color information may include the first to nth combination color information at the first to nth color measurement angles; and, the combination particle information may include the first to mth combination particle information at the first to mth particle measurement angles.

For example, a color measurement angle and a particle measurement angle may be set to the same angle as each other. For example, both the color measurement angle and particle measurement angle may be set to 15°, 45°, and 105°.

Herein, the comparison unit may compare the first target color information and the first combination color information at the first color measurement angle of 15°, may compare the second target color information and the second combination color information at the second color measurement angle of 45°, and may compare the third target color information and the third combination color information at the third color measurement angle of 105°. Moreover, the comparison unit may compare the first target particle information and the first combination particle information at the first particle measurement angle of 15°, may compare the second target particle information and the second combination particle information at the second particle measurement angle of 45°, and may compare the third target particle information and the third combination particle information at the third particle measurement angle of 105°.

For another example, both the color measurement angle and particle measurement angle may be set to 15°, 45°, and 75°.

Herein, the comparison unit may compare the first target color information and the first combination color information at the first color measurement angle of 15°, may compare the second target color information and the second combination color information at the second color measurement angle of 45°, and may compare the third target color information and the third combination color information at the third color measurement angle of 75°. Moreover, the comparison unit may compare the first target particle information and the first combination particle information at the first particle measurement angle of 15°, may compare the second target particle information and the second combination particle information at the second particle measurement angle of 45°, and may compare the third target particle information and the third combination particle information at the third particle measurement angle of 75°.

As another example, at least some of the color measurement angle and particle measurement angle may be set differently from each other. For example, the color measurement angle may be set to 15°, 45°, or 105°, and the particle measurement angle may be set to 15°, 45°, or 75°.

In this case, the comparison unit may compare the first target color information and the first combination color information at the first color measurement angle of 15°, may compare the second target color information and the second combination color information at the second color measurement angle of 45°, and may compare the third target color information and the third combination color information at the third color measurement angle of 105°. Moreover, the comparison unit may compare the first target particle information and the first combination particle information at the first particle measurement angle of 15°, may compare the second target particle information and the second combination particle information at the second particle measurement angle of 45°, and may compare the third target particle information and the third combination particle information at the third particle measurement angle of 75°.

For another example, the color measurement angle may be set to 15°, 45°, or 105°, and the particle measurement angle may be set to 15°, 45°, or 80°.

In this case, the comparison unit may compare the first target color information and the first combination color information at the first color measurement angle of 15°, may compare the second target color information and the second combination color information at the second color measurement angle of 45°, and may compare the third target color information and the third combination color information at the third color measurement angle of 105°. Moreover, the comparison unit may compare the first target particle information and the first combination particle information at the first particle measurement angle of 15°, may compare the second target particle information and the second combination particle information at the second particle measurement angle of 45°, and may compare the third target particle information and the third combination particle information at the third particle measurement angle of 80°.

For another example, the color measurement angle may be set to 15°, 45°, or 105°, and the particle measurement angle may be set to 15°, 45°, 75°, or 80°.

In this case, the comparison unit may compare the first target color information and the first combination color information at the first color measurement angle of 15°, may compare the second target color information and the second combination color information at the second color measurement angle of 45°, and may compare the third target color information and the third combination color information at the third color measurement angle of 105°. Moreover, the comparison unit may compare the first target particle information and the first combination particle information at the first particle measurement angle of 15°, may compare the second target particle information and the second combination particle information at the second particle measurement angle of 45°, may compare the third target particle information and the third combination particle information at the third particle measurement angle of 75°, and may compare the third target particle information and the third combination particle information at the fourth particle measurement angle of 80°.

For another example, the color measurement angle may be set to 20°, 50°, or 100°, and the particle measurement angle may be set to 15°, 45°, or 80°.

In this case, the comparison unit may compare the first target color information and the first combination color information at the first color measurement angle of 20°, may compare the second target color information and the second combination color information at the second color measurement angle of 50°, and may compare the third target color information and the third combination color information at the third color measurement angle of 100°. Moreover, the comparison unit may compare the first target particle information and the first combination particle information at the first particle measurement angle of 15°, may compare the second target particle information and the second combination particle information at the second particle measurement angle of 45°, and may compare the third target particle information and the third combination particle information at the third particle measurement angle of 80°.

For another example, the color measurement angle may be set to 15°, 45°, or 105°, and the particle measurement angle may be set to 20° or 60°.

In this case, the comparison unit may compare the first target color information and the first combination color information at the first color measurement angle of 15°, may compare the second target color information and the second combination color information at the second color measurement angle of 45°, and may compare the third target color information and the third combination color information at the third color measurement angle of 105°. Moreover, the comparison unit may compare the first target particle information and the first combination particle information at the first particle measurement angle of 20° and may compare the second target particle information and the second combination particle information at the second particle measurement angle of 60°.

The determination unit may determine optimal combination information based on the results of comparing the combination color information and the combination particle information with the target color information and target particle information, respectively.

For example, when a color difference value between the target color information and specific combination color information corresponding to specific combination information among combination information is within a threshold color difference range, and a particle difference value between the target particle information and specific combination particle information corresponding to the specific combination information is within a threshold particle difference range, the determination unit may determine the specific combination information as optimal combination information.

Herein, the threshold color difference range may be, but is not limited to, 0 to 1. For example, the threshold color difference range may be, but is not limited to, 0 to 1.5.

Besides, the threshold particle difference range may be, but is not limited to, 0 to 1. For example, the threshold particle difference range may be, but is not limited to, 0 to 1.5.

For reference, according to conventional methods, the color difference value is derived based on systems with a uniform color space, which did not consider a visual acceptability tolerance feature of a human. For reference, the visual acceptability tolerance is characterized by an elliptical shape rather than a circle, a stricter tolerance for color than chroma, and a larger tolerance for high-chroma than achromatic colors.

Moreover, according to conventional methods, a color difference value is derived based on the assumption of solid colors.

For example, a color difference value DE* is conventionally derived based on a chromaticity equation shown in Equation 1. [Equation 1] $DE * = \sqrt{{\left(ΔL*\right)}^{2} + {\left(Δa*\right)}^{2} + {\left(Δb*\right)}^{2}}$

For reference, DL^{*} (ΔL^{*}), Da^{*} (Δa^{*}) and Db^{*} (Δb^{*}) may be expressed as shown in Equation 2. [Equation 2] $\begin{matrix}Δ L * = {L}_{R}^{∗} - {L}_{s}^{∗} \\ Δ a * = {a}_{R}^{∗} - {a}_{s}^{∗} \\ Δ b * = {b}_{R}^{∗} - {b}_{s}^{∗}\end{matrix}$

For reference, 'L' (lightness information), 'a' (red-green information), and 'b' (yellow-blue information) may be information according to a Lab color space L^{*}a^{*}b, and the lightness information (L) may be information indicating lightness with a value between 0 (black) and 100 (white). Moreover, the red-green information (a) indicates which color is closer to red or green. A negative value may indicate a color closer to green, and a positive value may indicate a color closer to red. Moreover, the yellow-blue information (b) indicates which color is closer to yellow or blue. A negative value may indicate a color closer to blue, and a positive value may indicate a color closer to yellow. Furthermore, a subscript 'R' corresponds to target color information, and a subscript 'S' corresponds to combination color information.

However, as described above, conventional methods have not considered human visual acceptability tolerance and have derived color difference values based on the assumption of solid colors. Accordingly, even when a color difference value derived by using conventional techniques is close to 0, there may be significant differences from the color (visual impression) perceived/recognized by the naked eye.

To overcome the above issues, the metallic color mixing device according to an embodiment disclosed in the specification may calculate a color difference value based on the lightness information (L), chroma information (C), and hue information (h) of each of the specific combination color information and target color information, and may calculate a particle difference value based on the particle intensity information Sᵢ and particle area information Sₐ of each of the specific combination particle information and target particle information. Moreover, the color difference value may be calculated with further reference to brightness information (Value (V)).

For example, a metallic color mixing device according to an embodiment disclosed in the specification may calculate color difference values DE* and ΔE^{*} based on Equation 3. [Equation 3] $Δ E * = \sqrt{{\left({D}_{L}\right)}^{2} + {\left({D}_{C}\right)}^{2} + {\left({D}_{H}\right)}^{2}}$

Herein, parameters included within the square root of Equation 3 may be expressed as Equation 4. [Equation 4] $\begin{matrix}{D}_{L} = \frac{Δ {L}_{ab}^{′}}{{k}_{L} {S}_{L}} \\ {D}_{C} = \frac{Δ {C}_{ab}^{′}}{{k}_{C} {S}_{C}} \\ {D}_{H} = \frac{Δ {H}_{ab}^{′}}{{k}_{H} {S}_{H}}\end{matrix}$

For reference, k_{L}, k_{C}, and k_{H} may be assigned according to appropriate design and may correspond to weighting constants based on material properties.

Herein, the parameters included in Equation 4 may be calculated based on Equations 5 to 9 below. [Equation 5] $\begin{matrix}{V}_{L} = \frac{{L}_{ab , R}^{∗} + {L}_{ab , S}^{∗}}{2} \\ {V}_{C} = \frac{{C}_{ab , R}^{∗} + {C}_{ab , S}^{∗}}{2} \\ {V}_{h} = \frac{{h}_{ab , R} + {h}_{ab , S}}{2}\end{matrix}$

Here, L^{*}_{ab,R} and L^{*}_{ab,S} are brightness values of two metallic colors; C^{*}_{ab,R} and C^{*}_{ab,S} are chroma values of two metallic colors; and, h_{ab,R} and h_{ab,S} are color values of two metallic colors. Furthermore, V_{L} is an intermediate brightness value of the two metallic colors; Vc is an intermediate chroma value of the two metallic colors; and Vₕ is an intermediate color value of the two metallic colors. [Equation 6] $\begin{matrix}Δ {L}_{ab} = \left|{L}_{ab , R}^{∗}-{L}_{ab , S}^{∗}\right| \\ Δ {C}_{ab} = \left|{C}_{ab , R}^{∗}-{C}_{ab , S}^{∗}\right| \\ Δ {h}_{ab} = \left|{h}_{ab , R}-{h}_{ab , S}\right| \\ Δ {H}_{ab} = 2 {\left({C}_{ab , R}^{∗}-{C}_{ab , S}^{∗}\right)}^{\frac{1}{2}} sin \left(\frac{Δ {h}_{ab}}{2}\right)\end{matrix}$

Here, ΔL_{ab} is a brightness difference between two metallic colors; ΔC_{ab} is a chroma difference between the two metallic colors; Δh_{ab} is a color difference between the two metallic colors; and ΔH_{ab} is a converted color difference between the two metallic colors. [Equation 7] $\begin{matrix}if \left(Δ{L}_{ab}<0.1\right) , Δ {L}_{ab}^{′} = 3.63078 ⋅ Δ {L}_{ab} \\ else , Δ {L}_{ab}^{′} = {\left(Δ{L}_{ab}\right)}^{0.44} \\ if \left(Δ{C}_{ab}<0.1\right) , Δ {C}_{ab}^{′} = 3.01995 ⋅ Δ {C}_{ab} \\ else , Δ {C}_{ab}^{′} = {\left(Δ{C}_{ab}\right)}^{0.52} \\ if \left(Δ{H}_{ab}<0.1\right) , Δ {H}_{ab}^{′} = 1.09648 ⋅ Δ {H}_{ab} \\ else , Δ {H}_{ab}^{′} = {\left(Δ{H}_{ab}\right)}^{0.96}\end{matrix}$

Here, ΔL'_{ab} is a value obtained by converting a brightness difference between two metallic colors based on the condition of the equation; ΔC'_{ab} is a value obtained by converting the chroma difference between the two metallic colors based on the condition of the equation; and, ΔH'_{ab} is a value obtained by converting the color difference between two metallic colors based on the condition of the equation. [Equation 8] $\begin{matrix}T = \frac{0.8}{\left[0.6{\left\{\frac{{V}_{h} - 0}{180}\right\}}^{1.8}+1.3\right]} - \frac{1.3}{\left[0.2{\left\{\frac{{V}_{h} - 65}{70}\right\}}^{1.6}+0.8\right]} + \frac{1.1}{\left[0.4{\left\{\frac{{V}_{h} - 180}{120}\right\}}^{1.8}+1.3\right]} - \\ \frac{1.3}{\left[0.3{\left\{\frac{{V}_{h} - 285}{80}\right\}}^{1.7}+1.1\right]} + \frac{0.3}{\left[0.6{\left\{\frac{{V}_{h} - 360}{180}\right\}}^{1.8}+1.3\right]} + 1.1\end{matrix}$

Here, T is a function that may modify the color difference. [Equation 9] $\begin{matrix}{S}_{L} = 0.10 + 0.10 ⋅ {\left({V}_{L}\right)}^{0.68} + 0.08 ⋅ {\left({V}_{C}\right)}^{0.60} \\ {S}_{C} = 0.10 + 0.08 ⋅ {\left({V}_{L}\right)}^{0.44} + 0.76 ⋅ {\left({V}_{C}\right)}^{0.30} \\ {S}_{H} = \left\{0.10+0.10⋅{\left({V}_{L}\right)}^{0.50}+0.56⋅{\left({V}_{C}\right)}^{0.30}\right\} ⋅ T \\ if \left({S}_{L}<0.5\right) , then {S}_{L} = 0.5 \\ if \left({S}_{C}<0.5\right) , then {S}_{C} = 0.5 \\ if \left({S}_{H}<0.5\right) , then {S}_{H} = 0.5\end{matrix}$

Here, S_{L} is a brightness correction value of the two metallic colors; Sc is a chroma correction value of the two metallic colors; and, S_{H} is the color correction value of the two metallic colors.

Moreover, the metallic color mixing device according to an embodiment disclosed in the specification may calculate a particle difference value (delta texture; DT; ΔT) based on Equation 10. [Equation 10] $DT = \sqrt{{\left(A⋅α⋅DF\right)}^{2} + {\left(A⋅β⋅DS\right)}^{2} + {\left(D⋅γ⋅DG\right)}^{2}}$

For reference, values of A, B, a, b, α, β, and γ may be set regardless of the particle measurement angle, but are not limited thereto. For example, when the particle measurement angle is 15°, 'A' may be set to 0.18; 'B' may be set to 0.20; 'a' may be set to 1.00; 'b' may be set to 1.00; 'α' may be set to 1.00; 'β' may be set to 1.00; and 'γ' may be set to 2.30. When the particle measurement angle is 45°, 'A' may be set to 0.22, 'B' may be set to 0.20, 'a' may be set to 1.00, 'b' may be set to 1.00, 'α' may be set to 1.00, 'β' may be set to 1.00; and 'γ' may be set to 2.30.

In addition, parameters included in Equation 10 may be expressed as in Equation 11. [Equation 11] $\begin{matrix}DF = \sqrt{{S}_{a 1} ⋅ {S}_{i 1}} - \sqrt{{S}_{a 2} ⋅ {S}_{i 2}} \\ {DS}_{a} = {S}_{a 2} - {S}_{a 1} \\ {DS}_{i} = {S}_{i 2} - {S}_{i 1} \\ DS = \sqrt{{\left(a⋅{DS}_{a}\right)}^{2} + {\left(b⋅{DS}_{i}\right)}^{2}} \\ DG = {G}_{2} - {G}_{1}\end{matrix}$

For reference, Sₐ denotes particle area; Sᵢ denotes particle intensity; and, 'G' denotes graininess in the shade. Subscript '1' corresponds to target particle information, and subscript '2' corresponds to combination particle information.

The particle area represents the frequency of particles per unit area. The particle intensity represents the intensity (size, etc.) of a single particle. The graininess in the shade represents the characteristics of a particle, such as particle area and particle intensity, observed in the shade (e.g., reflected light, indirect light, etc.).

For example, (i) when a color difference value between first to nth target color information and first to nth specific combination color information at first to nth color measurement angles of specific combination information is within a threshold color difference range, and (ii) a particle difference value between first to mth target particle information and first to mth specific combination particle information at first to mth particle measurement angles of specific combination information is within a threshold particle difference range, the determination unit may determine specific combination information as optimal combination information.

For example, the color difference value between the first to nth specific combination color information and the first to nth target color information may be a difference value between (i) an average value of the first to nth specific combination color information and (ii) an average value of the first to nth target color information.

In the meantime, there may be cases where the sense of color and/or graininess according to combination information generated through the above process is different from the sense of color and/or graininess of the target object. In such cases, a process of generating modified combination information may be additionally performed.

For example, when a color difference value between combination color information and target color information is outside a threshold color difference range, or a particle difference value between combination particle information and target particle information is outside a threshold particle difference range, the generation unit may generate at least one modified combination information based on the target color information and the target particle information.

Besides, the comparison unit may compare modified combination particle information and modified combination color information corresponding to the modified combination information with the target color information and the target particle information, respectively.

Moreover, the determination unit may determine, as optimal combination information, the modified combination information based on the results of comparing the modified combination color information and the modified combination particle information with the target color information and target particle information, respectively.

For example, (i) when a color difference value between first to nth target color information and first to nth modified combination color information at first to nth color measurement angles of modified combination information is within a threshold color difference range, and (ii) a particle difference value between first to mth target particle information and first to mth modified combination particle information at first to mth particle measurement angles of modified combination information is within a threshold particle difference range, the determination unit may determine the modified combination information as the optimal combination information.

Furthermore, the metallic color mixing device 100 may provide a user terminal with the optimal combination information determined as described above.

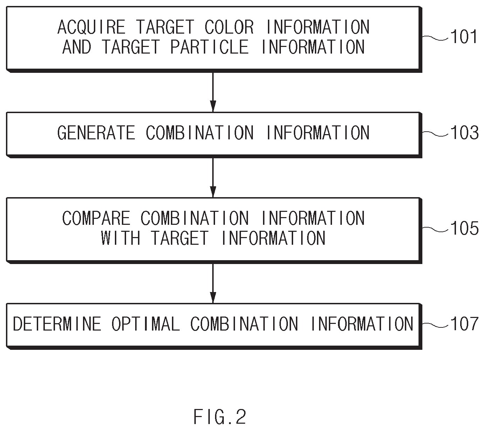

FIG. 2 is a flowchart schematically illustrating a metallic color mixing method, according to an embodiment disclosed in the specification.

Referring to FIG. 2, in operation 101, an acquisition unit may acquire target color information and target particle information of a target object.

In operation 103, a generation unit may generate at least one combination information based on the target color information and the target particle information.

In operation 105, the comparison unit may compare combination particle information and combination color information corresponding to the combination information with the target color information and the target particle information, respectively.

In operation 107, the determination unit may determine optimal combination information based on the results of comparing the combination color information and the combination particle information with the target color information and target particle information, respectively.

Hereinafter, the accuracy of optimal combination information determined by the metallic color mixing method according to an embodiment disclosed in the specification and that of combination information obtained by using the prior art will be compared and described.

First of all, the accuracy of combination color information will be compared and described with reference to Table 1.

**[Table 1]**

| Angle | Deter mination results | Prior art 1 | Prior art 2 | Prior art 3 | Prior art 4 | Prior art 5 | Present disclosure |
|---|---|---|---|---|---|---|---|
| 15° | Match | 51 | 51 | 54 | 63 | 73 | 81 |
| | Mismatch | 49 | 49 | 46 | 37 | 27 | 19 |
| 45° | Match | 78 | 81 | 82 | 84 | 85 | 85 |
| | Misma tch | 22 | 19 | 18 | 16 | 15 | 15 |
| 110° | Match | 75 | 72 | 79 | 70 | 79 | 89 |
| | Mismatch | 25 | 28 | 21 | 30 | 21 | 11 |

Referring to Table 1, while an expert (colorist) visually determines the similarity of target color information of combination color information for each of 100 pieces of target color information and 100 pieces of combination color information corresponding thereto, whether the expert's visual determination results match the determination results according to the prior art techniques utilizing equations 1 and 2 or existing color difference equations based on them, and the present disclosure utilizing equations 3 to 11 may be determined.

For example, the determination of the color difference value according to the prior art 1 is highly inaccurate in that at a color measurement angle of 15°, there are only 51 cases in which the determination results according to prior art 1 match the expert's determination results, and there are 49 mismatched cases. However, the determination of the color difference value according to an embodiment of the present disclosure is highly accurate in that there are 81 matched cases according to an embodiment of the present disclosure, and there are only 19 mismatched cases.

For another example, the determination of the color difference value according to the prior art 2 is highly inaccurate in that at a color measurement angle of 110°, because there are only 72 cases in which the determination results according to prior art 2 match the expert's determination results, while there are 28 mismatched cases. However, the determination of the color difference value according to an embodiment of the present disclosure is highly accurate in that there are 89 matched cases according to an embodiment of the present disclosure, and there are only 11 mismatched cases.

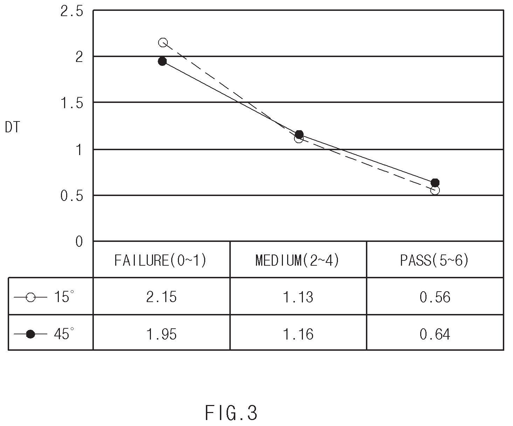

Next, the accuracy of the combination particle information will be compared and described with reference to FIG. 3, Table 2, and Table 3.

FIG. 3 shows the average of particle difference values according to the metallic color mixing method disclosed in the specification in a state where six experts (colorists) visually determine the similarity of target particle information of combination particle information for 60 pieces of target particle information and 60 combination particle information corresponding to thereto for each determination section.

For example, it may be identified that the average of particle difference values (DT) derived from the metallic color mixing method disclosed in the specification is 2.15 at a particle measurement angle of 15°, with respect to pieces of combination particle information in the failure determination range (when it is determined as pass by 0 to 1 colorists) determination range. That is, it may be identified that the determination of the particle difference value according to an embodiment of the present disclosure has a similar correlation with the determination tendency of experts in that the average value derived according to an embodiment of the present disclosure falls outside the aforementioned threshold particle difference range (e.g., 0 to 1.5).

For another example, it may be identified that the average of particle difference values (DT) derived from the metallic color mixing method disclosed in the specification is 1.13 at a particle measurement angle of 15°, with respect to pieces of combination particle information in the medium determination range (when it is determined as pass by 2 to 4 colorists) determination range. That is, it may be identified that the determination of the particle difference value according to an embodiment of the present disclosure has a similar correlation with the determination tendency of experts in that the average value derived according to an embodiment of the present disclosure falls within the aforementioned threshold particle difference range (e.g., 0 to 1.5) but is a relatively great value that exceeds 1.

For still another example, it may be identified that the average of particle difference values (DT) derived from the metallic color mixing method disclosed in the specification is 0.64 at a particle measurement angle of 45°, with respect to pieces of combination particle information in the pass determination range (when it is determined as pass by 5 to 6 colorists) determination range. That is, it may be identified that the determination of the particle difference value according to an embodiment of the present disclosure has a similar correlation with the determination tendency of experts in that the average value derived according to an embodiment of the present disclosure falls within the aforementioned threshold particle difference range (e.g., 0 to 1.5).

**[Table 2]**

| 15° | Number of passes according to visual determination | | | Sum |
|---|---|---|---|---|
| | Failure (0~1) | Medium (2~4) | Pass (5~6) | |
| Number | 18 | 15 | 27 | 60 |
| Match | 16 | 14 | 25 | 55 |
| Mismatch | 2 | 1 | 2 | 5 |
| Match ratio | 89% | 93% | 93% | |
| average DT | 2.15 | 1.13 | 0.56 | |

**[Table 3]**

| 45° | Number of passes according to visual determination | | | Sum |
|---|---|---|---|---|
| | Failure (0~1) | Medium (2~4) | Pass (5~6) | |
| Number | 24 | 13 | 23 | 60 |
| Match | 23 | 9 | 23 | 55 |
| Mismatch | 1 | 4 | 0 | 5 |
| Match ratio | 96% | 69% | 100% | |
| average DT | 1.95 | 1.16 | 0.64 | |

Referring to Table 2, it may be identified that there are matched 55 cases, in which the determination results according to an embodiment of the present disclosure match the expert's determination results at a particle measurement angle of 15°, and only 5 mismatched cases. Referring to Table 3, it may be identified that the determination of the color difference value according to an embodiment of the present disclosure is highly accurate in that there are matched 55 cases and only 5 mismatched cases.

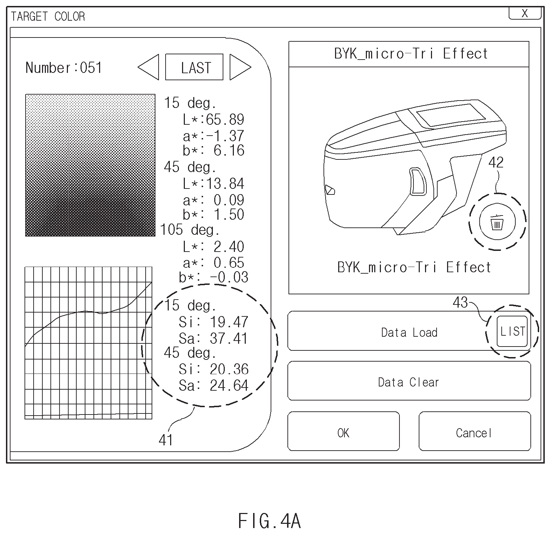

FIGS. 4A to 4D are schematic diagrams illustrating an UI according to a metallic color mixing method, according to an embodiment disclosed in the specification.

Referring to FIG. 4A, unlike conventional colorimeters, it may be identified that particle intensity information Sᵢ and particle area information Sₐ are displayed in a first display area 41 for each particle measurement angle. Moreover, in a second display area 42, a trash can-shaped button for deleting saved data may be identified. Also, in a third display area 43, a button for retrieving specific data from a saved data list may be identified.

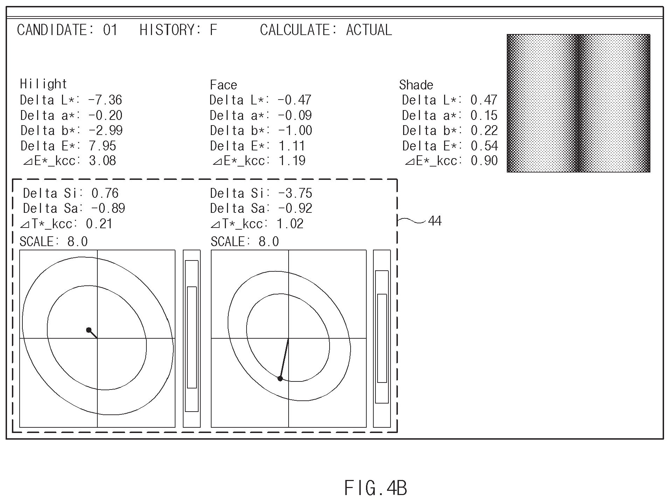

Furthermore, referring to FIG. 4B, unlike conventional colorimeters, in a fourth display area 44, it may be identified that not only color information (e.g., a color difference value) for each color measurement angle but also particle information (e.g., a particle difference value) for each particle measurement angle are simultaneously displayed, and a graph (a tolerance circle) capable of determining whether visual acceptability tolerance is satisfied is displayed.

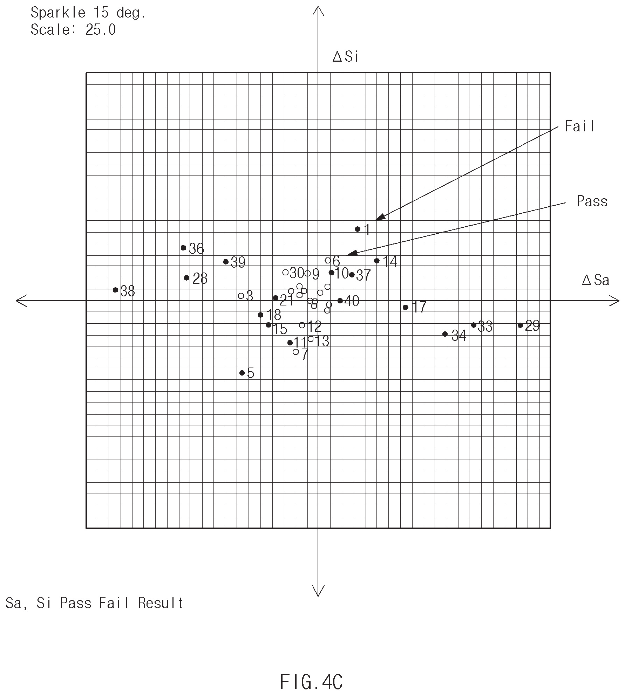

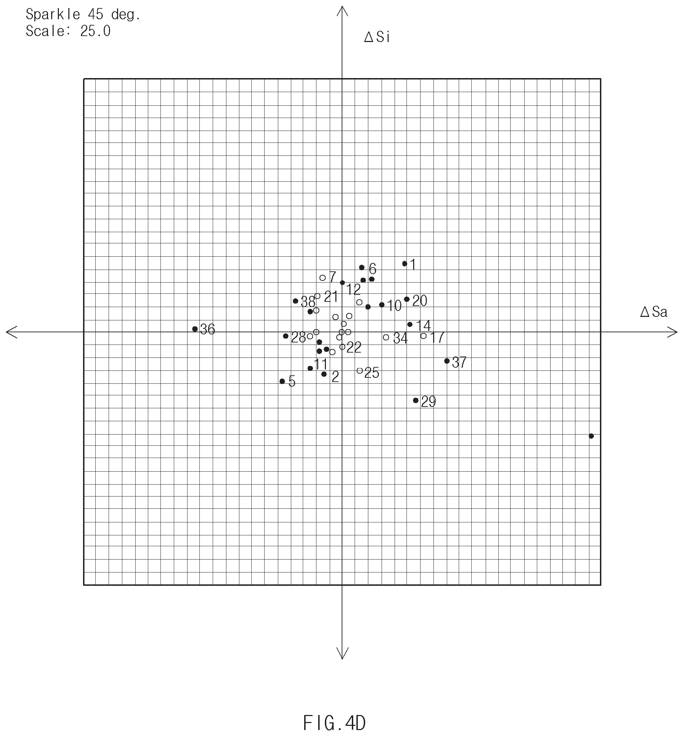

Furthermore, referring to FIGS. 4C and 4D, the angle-specific determination results according to the metallic color mixing method according to an embodiment disclosed in the specification may be identified with respect to 40 combination information samples.

For example, referring to FIG. 4C, which illustrates the determination results at a particle measurement angle of 15°, it may be identified that DSa (ΔSa) and DSi (ΔSi) are displayed for each sample, and it may be identified that the color of a sample (Fail) determined as "failure" and the color of a sample (Pass) determined as "pass" are displayed separately. The description of FIG. 4D, which illustrates the determination results at a particle measurement angle of 45°, is similar to/identical to FIG. 4C, and thus any redundant descriptions will be omitted.

According to the metallic color mixing method disclosed in the specification, target color information and target particle information may be obtained online without securing a physical sample of the target object. Furthermore, determinations may be made at a level similar to/identical to that of experts by determining whether combination color information and combination particle information are similar to target color information and target particle information based on color difference and particle difference equations, which are highly correlated with the naked eye. Accordingly, the determined optimal combination information may be quickly transmitted online to a user terminal, and thus refinishing (refinishing, etc.) may be quickly performed on a user's target object (e.g., a vehicle) without being restricted by the physical distance between the user and a colorist.

In the above, even though all components constituting an embodiment disclosed in the specification are described as being combined to one or operating in combination, embodiments disclosed in the specification are not necessarily limited to the embodiment. That is, within the scope of embodiments disclosed in the specification, all components may be selectively combined and may perform a function(s).

In addition, the terms such as "comprise", "include", and "have" described above mean that the corresponding component may be included, unless there is a particularly contrary statement, and should be interpreted as further including another component, not excluding another component. Unless otherwise defined herein, all the terms used herein, which include technical or scientific terms, may have the same meaning that is generally understood by a person skilled in the art to which embodiments disclosed in the specification pertain. Terms commonly used, such as those defined in the dictionary, should be interpreted as having a meaning that is consistent with the meaning in the context of the related art and will not be interpreted as having an idealized or overly formal meaning unless expressly defined in in the specification.

Hereinabove, the above description is merely illustrative of the technical idea disclosed in the specification, and various modifications and variations may be made by one skilled in the art, to which the embodiments disclosed in the specification belong, without departing from the essential characteristic of the embodiments disclosed in the specification. Therefore, embodiments disclosed in the specification are intended not to limit but to explain the technical idea of embodiments disclosed in the specification, and the scope of the technical idea disclosed in the specification is not limited by this embodiment. The scope of protection disclosed in the specification should be construed by the attached claims, and all equivalents thereof should be construed as being included within the scope of the specification.

## Claims

1. A metallic color mixing method, the method comprising:
obtaining target particle information and target color information of a target object;
generating at least one combination information based on the target color information and the target particle information;
comparing combination color information and combination particle information corresponding to the combination information with the target color information and the target particle information, respectively; and
determining optimal combination information based on a result of respectively comparing the combination color information and the combination particle information with the target color information and target particle information.

2. The method of claim 1, wherein the determining of the optimal combination information includes:
when a color difference value between the target color information and specific combination color information corresponding to specific combination information among the combination information is within a threshold color difference range, and a particle difference value between the target particle information and specific combination particle information corresponding to the specific combination information is within a threshold particle difference range, determining the specific combination information as the optimal combination information.

3. The method of claim 2, wherein the target color information includes first to nth target color information at first to nth color measurement angles, the target particle information includes first to mth target particle information at first to mth particle measurement angles, the combination color information includes first to nth combination color information at the first to nth color measurement angles, and, the combination particle information includes first to mth combination particle information at the first to mth particle measurement angles.

4. The method of claim 3, wherein the determining of the optimal combination information includes:
(i) when a color difference value between the first to nth target color information and first to nth specific combination color information at the first to nth color measurement angles of the specific combination information is within the threshold color difference range, and (ii) a particle difference value between the first to mth target particle information and first to mth specific combination particle information at the first to mth particle measurement angles of the specific combination information is within the threshold particle difference range, determining the specific combination information as the optimal combination information.

5. The method of claim 2, wherein the color difference value is calculated based on lightness information, chroma information, and hue information of each of the specific combination color information and the target color information, and the particle difference value is calculated based on particle intensity information and particle area information of each of the specific combination particle information and the target particle information.

6. The method of claim 1, wherein the determining of the optimal combination information includes:
when a color difference value between the combination color information and the target color information is outside a threshold color difference range, or a particle difference value between the combination particle information and the target particle information is outside a threshold particle difference range, generating at least one modified combination information based on the target color information and the target particle information;
comparing modified combination color information and modified combination particle information corresponding to the modified combination information with the target color information and the target particle information, respectively; and
determining optimal combination information based on a result of respectively comparing the modified combination color information and the modified combination particle information with the target color information and target particle information.

7. The method of claim 1, further comprising:
after the determining of the optimal combination information, providing the optimal combination information to a user terminal.

8. A metallic color mixing device comprising:
an acquisition unit configured to obtain target particle information and target color information of a target object;
a generation unit configured to generate at least one combination information based on the target color information and the target particle information;
a comparison unit configured to compare combination color information and combination particle information corresponding to the combination information with the target color information and the target particle information, respectively; and
a determination unit configured to determine optimal combination information based on a result of respectively comparing the combination color information and the combination particle information with the target color information and target particle information.

9. The metallic color mixing device of claim 8, wherein when a color difference value between the target color information and specific combination color information corresponding to specific combination information among the combination information is within a threshold color difference range, and a particle difference value between the target particle information and specific combination particle information corresponding to the specific combination information is within a threshold particle difference range, the determination unit determines the specific combination information as the optimal combination information.

10. The metallic color mixing device of claim 9, wherein the target color information includes first to nth target color information at first to nth color measurement angles, the target particle information includes first to mth target particle information at first to mth particle measurement angles, the combination color information includes first to nth combination color information at the first to nth color measurement angles, and, the combination particle information includes first to mth combination particle information at the first to mth particle measurement angles.

11. The metallic color mixing device of claim 10, wherein (i) when a color difference value between the first to nth target color information and first to nth specific combination color information at the first to nth color measurement angles of the specific combination information is within the threshold color difference range, and (ii) a particle difference value between the first to mth target particle information and first to mth specific combination particle information at the first to mth particle measurement angles of the specific combination information is within the threshold particle difference range, the determination unit determines the specific combination information as the optimal combination information.

12. The metallic color mixing device of claim 9, wherein the color difference value is calculated based on lightness information, chroma information, and hue information of each of the specific combination color information and the target color information, and the particle difference value is calculated based on particle intensity information and particle area information of each of the specific combination particle information and the target particle information.

13. The metallic color mixing device of claim 8, wherein when a color difference value between the combination color information and the target color information is outside a threshold color difference range, or a particle difference value between the combination particle information and the target particle information is outside a threshold particle difference range, the generation unit generates at least one modified combination information based on the target color information and the target particle information,
wherein the comparison unit compares modified combination color information and modified combination particle information corresponding to the modified combination information with the target color information and the target particle information, respectively, and
wherein the determination unit determines optimal combination information based on a result of respectively comparing the modified combination color information and the modified combination particle information with the target color information and target particle information.

14. The metallic color mixing device of claim 8, further comprising:
a communication device configured to provide the optimal combination information to a user terminal.
